# EUROPÄISCHE PATENTANMELDUNG

(11) **EP 4 804 334 A1**
(43) Veröffentlichungstag der Anmeldung: **09.09.2026**
(21) Anmeldenummer: 26162229.4
(22) Anmeldetag: 04.03.2026
(51) Int. Cl.: H01Q 15/00, B33Y 80/00, B63G 8/38, B63G 8/39, H01Q 17/00

(54) **SEHROHRVERKLEIDUNG MIT ELEKTROMAGNETISCH AKTIVER INNENSTRUKTUR**

(30) Priorität: 05.03.2025 DE 102025108301
(71) Anmelder: TKMS GmbH, 24143 Kiel (DE); thyssenkrupp AG, 45143 Essen (DE)
(72) Erfinder: Kranz, Jannis, 24235 Laboe (DE); Avsic, Tom, 24161 Altenholz (DE); Gudegast, Lars, 23715 Bosau (DE); Fouquet, Martin, 16321 Bernau (DE)
(74) Vertreter: thyssenkrupp Intellectual Property GmbH

(57) **Zusammenfassung**

Die vorliegende Erfindung betrifft ein Verkleidungselement 10 für ein Ausfahrgerät eines Unterseebootes, wobei das Verkleidungselement 10 eine Tragstruktur 20 aufweist, wobei auf der Tragstruktur 20 eine funktionale Schicht 30 angeordnet ist, wobei die funktionale Schicht 30 wenigstens zwei Ebenen aufweist, wobei in jeder Ebene elektrisch leitfähige Spaltringe 40 periodisch angeordnet sind, wobei die funktionale Schicht 30 eine isolierende Matrix aufweist.

## Beschreibung

Die Erfindung betrifft eine Verkleidung für ein Ausfahrgerät eines Unterseebootes, wobei die Verkleidung eine innere Struktur zur Reduktion der elektromagnetischen Signatur, insbesondere des Radarquerschnitts aufweist.

Aus der WO 2022 / 084 462 A1 ist ein Antennensystem bekannt, das mindestens einen Teil umfasst, der die Form einer wabenartigen Struktur annimmt, die sich zwischen zwei Endflächen erstreckt, wobei die wabenartige Struktur röhrenförmige Zellen umfasst, wobei jede Zelle eine Vielzahl von Wänden umfasst, die die Zelle begrenzen, wobei sich die Wände zwischen den beiden Endflächen erstrecken und aus einem dielektrischen Material gebildet sind, wobei mindestens eine Zelle mindestens einen Streifen einer elektrisch leitfähigen Beschichtung umfasst, der in mindestens einer Wand oder auf einer Oberfläche von mindestens einer Wand angeordnet ist, wobei die Wände transparent sind, und wobei der Teil des Antennensystems Parameter aufweist, die so ausgewählt sind, dass das Antennensystem eine optische Durchlässigkeit von mindestens 80 % für eine sichtbare Welle und einen Einfallswinkel normal zu einer Ebene parallel zu mindestens einer der beiden Endflächen aufweist.

Aufgabe der Erfindung ist es, den Radarquerschnitt der Ausfahrgeräte zu minimieren.

Gelöst wird diese Aufgabe durch das Verkleidungselement mit den in Anspruch 1 angegebenen Merkmalen sowie durch das Verfahren mit den in Anspruch 10 angegebenen Merkmalen. Vorteilhafte Weiterbildungen ergeben sich aus den Unteransprüchen, der nachfolgenden Beschreibung sowie den Zeichnungen.

Das erfindungsgemäße Verkleidungselement ist für einen Bestandteil eines Unterseebootes, welches bei bestimmten Betriebsarten über Wasser angeordnet ist, beispielsweise und insbesondere ein Ausfahrgerät eines Unterseebootes. Ebenso kann ein erfindungsgemäßes Verkleidungselement beispielsweise im Bereich des Turms eingesetzt werden. Das Verkleidungselement ist im eingebauten Zustand damit Bestandteil des Unterseebootes. Somit kann das Verkleidungselement auch an einem bestehenden Unterseeboot eingesetzt werden, indem die dort vorhandenen Verkleidungselemente durch erfindungsgemäße Verkleidungselemente ersetzt werden. Somit ist das Verkleidungselement als Bauelement oder Ersatzteil für den Einbau in ein Unterseeboot zu betrachten. Das Verkleidungselement dient als Außenhaut beispielsweise des Ausfahrgerätes und kann damit gezielt zur Minimierung der Signatur des Ausfahrgerätes, beispielsweise eines Periskops, eines Schnorchels oder einer Antenne. Hier ist das Ausfahrgerät bevorzugt mit einer Mehrzahl an Verkleidungselementen an der Außenseite verkleidet. Das Verkleidungselement weist eine funktionale Schicht angeordnet. Die funktionale Schicht weist wenigstens zwei Ebenen auf. Die Ebenen sind im Inneren der funktionalen Schicht und ergeben sich einfach aus der Funktionalität und stellen im fertigen Verkleidungselement kein eigenständiges Bauteil dar. In jeder Ebene weist eine elektrisch leitfähige Resonanzstruktur auf. Ein wichtiges und sehr bekanntes Beispiel für eine elektrisch leitfähige Resonanzstruktur sind periodisch angeordnete elektrisch leitfähige Spaltringe . Die funktionale Schicht weist eine isolierende Matrix auf. Dadurch wird es möglich, die funktionale Schicht und damit das Verkleidungselement gezielt absorbierend für elektromagnetische Strahlung auszubilden und mit der Resonanzstruktur, beispielsweise mit den Spaltringen, in der Größenordnung von mm oder cm ergeben sich Strukturen, die gerade für im Radar verwendete Teile des elektromagnetischen Spektrums absorbierend sind. Damit sind diese Strukturen auch gerade in der Strukturgröße, welche fertigungstechnisch sehr gut herstellbar sind, sodass die über Wasser befindlichen Teile eines Unterseebootes, beispielsweise und insbesondere die Ausfahrgeräte, dadurch einen sehr geringen Radarquerschnitt aufweisen, sodass die Entdeckungswahrscheinlichkeit für das Unterseeboot minimiert wird.

Ist das Verkleidungselement an einem Ausfahrgerät angeordnet, so kann beispielsweise nur das obere Drittel des Ausfahrgeräts mit erfindungsgemäßen Verkleidungselementen versehen sein, sodass die Signaturreduktion gerade im Schnorchelbetrieb minimal ist. Bei regulärer Überwasserfahrt sind deutlich mehr Bauteile, insbesondere der Turm, über Wasser und somit der Radarquerschnitt ohnehin sehr viel größer. Auch wird die Schnorchelfahrt gerade in den Bereichen eingesetzt, wo im Gegensatz zur normalen Überwasserfahrt die Signatur einsatzbedingt besonders relevant ist.

In einer weiteren Ausführungsform der Erfindung weist Das Verkleidungselement weist eine Tragstruktur auf. Die Tragstruktur ist für die Stabilität des Verkleidungselements wesentlich. Insbesondere ist zu berücksichtigen, dass die Tragstruktur alle Kräfte auch bei Fahrt unter Wasser, beispielsweise während des Ausfahrens oder Einholens des Ausfahrgerätes aufnehmen kann. Auf der Tragstruktur ist die funktionale Schicht angeordnet. Insbesondere ist die funktionale Schicht direkt auf die Tragstruktur aufgebracht, sodass diese zusammen eine Einheit bilden.

In einer weiteren Ausführungsform der Erfindung weist die elektrisch leitfähige Resonanzstruktur periodisch angeordnete elektrisch leitfähige Spaltringe auf.

In einer weiteren Ausführungsform der Erfindung sind die Spaltringe in den Ebenen so angeordnet, dass übereinanderliegende Spaltringe einen um 180° versetzte Spaltöffnung aufweisen.

In einer weiteren Ausführungsform der Erfindung weisen einige Ebenen die Spaltringe auf, wobei einige Ebenen Stabantennen aufweisen.

In einer weiteren Ausführungsform der Erfindung weist die elektrisch leitfähige Resonanzstruktur periodisch angeordnete elektrisch leitfähige Jerusalemkreuze auf.

In einer weiteren Ausführungsform der Erfindung ist die Tragstruktur ein faserverstärkter Kunststoff. Insbesondere handelt es sich um einen glasfaserverstärkten Kunststoff.

In einer weiteren Ausführungsform der Erfindung ist die Form des Verkleidungselements hydrodynamisch optimiert. Da das Verkleidungselement die äußere Hülle des Ausfahrgerätes bildet, wird diese vom Wasser angeströmt. Daher ist eine Optimierung auf die Hydrodynamik wünschenswert. Dieses ermöglicht größere Verkleidungselemente. Ohne eine Optimierung kann man kleinere Verkleidungselemente verwenden, die dann hydrodynamisch optimiert angeordnet werden, beispielsweise in Form kleiner Kacheln.

In einer weiteren Ausführungsform der Erfindung ist die funktionale Schicht mittels additiver Fertigungsverfahren auf die Tragstruktur aufgebracht. Es wird also zunächst eine Tragstruktur bereitgestellt und auf diese dann beispielsweise im 3D-Druck die funktionale Schicht Ebene für Ebne aufgebaut. Da hierbei einzelne Ebenen sowohl leitende als auch nichtleitende Bereiche aufweisen, sind für diese Ebenen bei gewissen Verfahren zwei getrennte Schritte jeweils notwendig.

In einer weiteren Ausführungsform der Erfindung ist das Verkleidungselement für ein Ausfahrgerät mit einer Antenne ausgebildet. Die funktionale Schicht ist durchlässig für die Frequenz der Antenne ausgebildet. Dieses erfolgt über die Anordnung und Größe der Spaltringe, da über die Größe die Frequenz eingestellt werden kann, in der eine Wechselwirkung und damit Absorption elektromagnetsicher Strahlung erfolgt. In erster Näherung ist hier ein direkter Zusammenhang zwischen Strukturgröße der leitenden Elemente und der Wellenlänge der elektromagnetischen Strahlung. Daher sind derartige Strukturen im Radarbereich vergleichswiese einfach zu fertigen, für sichtbares Licht jedoch aufgrund der Annäherung an die atomare Strukturgröße sehr schwierig und aufwändig. Da erfindungsgemäß jedoch der Radar-Bereich der elektromagnetischen Strahlung im Fokus steht, bilden praktisch alle additiven Fertigungsmethoden die notwendigen Strukturgrößen ab.

In einer weiteren Ausführungsform der Erfindung ist die funktionale Schicht ein Metamaterial. Metamaterialien zeichnen sich durch einen negativen Brechungsindex aus, was diese besonders geeignet für die Signaturreduktion macht, mehr noch als jedes absorbierende Material. Da hier, wie bereits ausgeführt, der Fokus im Radarbereich und somit im Bereich von Strukturgrößen von mm bis cm liegt sind solche Metamaterialien seit langer Zeit bekannt und können zuverlässig hergestellt werden.

In einer weiteren Ausführungsform der Erfindung weist das Verkleidungselement zusätzlich eine schallabsorbierende Beschichtung auf. Die schallabsorbierende Beschichtung kann auf der der funktionalen Schicht gegenüberliegenden Seite der Tragstruktur oder auf der funktionalen Schicht aufgebracht sein. Dadurch wird eine Signaturreduktion auch im Unterwasserbereich gegenüber Sonar erreicht.

In einer weiteren Ausführungsform der Erfindung weist das Verkleidungselement zwei funktionale Schichten auf, beispielsweise auf beiden gegenüberliegenden Seiten einer Tragstruktur. Insbesondere können die beiden funktionalen Schichten auf unterschiedliche Frequenzbänder der elektromagnetischen Strahlung optimiert sein, beispielsweise eine auf den Frequenzbereich von 9 bis 10 GHz und die andere auf 35 GHz. Dieses ermöglicht eine optimale Abschirmung und damit Reduktion des Radarquerschnitts.

In einer weiteren Ausführungsform der Erfindung sind die Spaltringe aus amagnetischem Stahl. Zwar wäre beispielsweise Silber aufgrund der besseren Leitfähigkeit besser, da aber auch andere für ein Unterseeboot mittels additiver Fertigungsverfahren hergestellte metallische Bauteile aus amagnetischem Stahl gefertigt werden, ist so eine bessere Nutzung der Fertigungsanlagen möglich.

In einem weiteren Aspekt betrifft die Erfindung ein Verfahren zur Herstellung eines erfindungsgemäßen Verkleidungselements. Das Verfahren weist die Schritte auf:
a) Bereitstellen einer Tragstruktur,
b) Auftragen einer funktionalen Schicht mittels additiver Fertigungsverfahren.

Additive Fertigungsverfahren ermöglichen in besonders einfacher Weise einen Aufbau, in dem elektrisch leitfähige Strukturen mit einer Strukturgröße im mm bis cm Bereich aufgebaut werden. Reproduzierbarkeit und Genauigkeit liegen in einem für den Radarbereich optimalen Bereich. Gleichzeitig sind die Materialmengen für die funktionale Schicht gering genug, sodass diese sich mittel additiver Fertigungsverfahren auch effizient herstellen lassen. Der Aufbau auf einer Tragstruktur stellt zugleich in sehr effizienter Weise sicher, dass das Verkleidungselement insbesondere den unter Wasser wirkenden Strömungskräften auch bei Fahrt des Unterseebootes standhalten kann.

In einer weiteren Ausführungsform der Erfindung wird als additives Fertigungsverfahren ein Lasersinterverfahren gewählt. Ein Lasersinterverfahren erlaubt in besonders effizienter Weise den Aufbau der notwendigen elektrisch leitfähigen Strukturen in einer isolierenden Matrix. Hierzu werden in den entsprechenden Ebenen alternierend elektrisch leitfähige und elektrisch isolierende Pulver aufgetragen. Dieses Verfahren ist besonders bevorzugt für eine ebene Tragstruktur. Weist die Tragstruktur eine Krümmung zur Optimierung der hydrodynamischen Eigenschaften auf, so sind andere additive Fertigungsverfahren bevorzugt, beispielsweise der Druck mittels Filamenten.

In einer weiteren Ausführungsform der Erfindung erfolgt das Auftragen in Schritt b) schichtweise parallel zur beschichteten Oberfläche der Tragstruktur.

In einer weiteren Ausführungsform der Erfindung wird zur Auslegung der funktionalen Schicht eine Durchlassfrequenz vorgegeben. Die Durchlassfrequenz ist zumeist die Empfangs- und/oder Sendefrequenz einer unter dem Verkleidungselement angeordneten Antenne.

In einer weiteren Ausführungsform der Erfindung werden die Absorptionseigenschaften der funktionalen Schicht auf 10⁹ bis 10¹¹ Hz optimiert. In diesem Bereich der elektromagnetischen Strahlung liegen die meisten Radar-Anwendungen. Insbesondere die Absorptionseigenschaften der funktionalen Schicht auf einen der Bereiche optimiert ausgewählt aus der Liste umfassend 3 GHz, 9 bis 10 GHz, 15 GHz, 35 GHz. Besonders bevorzugt ist der Bereich um 9 bis 10 GHz. Üblicherweise kann die Dämpfung um so effektiver sein, je schmalbandiger die Absorption gewählt wird.

In einer weiteren Ausführungsform der Erfindung werden die Absorptionseigenschaften der funktionalen Schicht auf eine Dämpfung von wenigstens 5 dB ausgelegt. Bei höheren Frequenzen wird die Dämpfung vorteilhaft auf wenigstes 10 dB, weiter bevorzugt wenigstens 15 dB ausgelegt. Sehr schmalbandig lassen sich auch um 50 dB erreichen, etwas breitbandiger bis 20 dB. Hier ist das Optimum zwischen maximaler Absorption und Absorptionsbreite für den Anwendungszweck einzustellen, insbesondere durch die zu erwartenden Erfassungsfrequenzen eines wahrscheinlichen Gegners.

Nachfolgend ist das erfindungsgemäße Verkleidungselement anhand eines in den Zeichnungen dargestellten Ausführungsbeispiels näher erläutert.
- Fig. 1: erste Ausführungsform
- Fig. 2: zweite Ausführungsform
- Fig. 3: Spaltringe
- Fig. 4: gekreuzte Dipole
- Fig. 5: Jerusalemkreuz
- Fig. 6: Streifen / Drähte / Dipole
- Fig. 7: querverbundene Drähte
- Fig. 8: zweifach periodische Streifen

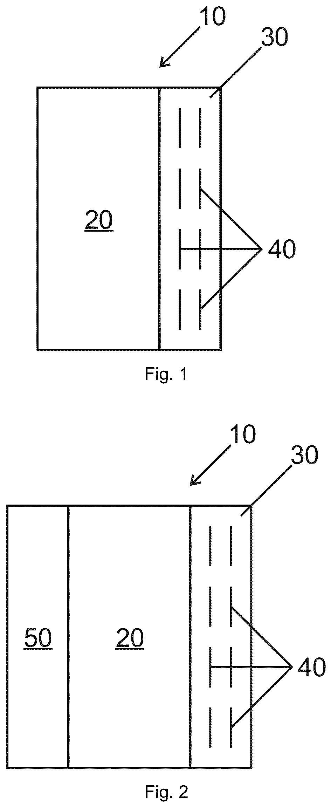

In Fig. 1 ist eine erste beispielhafte Ausführungsform eines erfindungsgemäßen Verkleidungselements 10 im Querschnitt gezeigt. Auf einer Tragstruktur 20 ist eine funktionale Schicht 30 aufgebracht, in der funktionalen Schicht 30 sind beispielhaft zwei Ebenen mit Spaltringen 40 vorhanden, die im gezeigten Beispiel periodisch und exakt übereinander und parallel zur Tragstruktur 20 angeordnet sind.

Die in Fig. 2 gezeigte zweite beispielhafte Ausführungsform unterscheidet sich von der in Fig. 1 gezeigten ersten beispielhaften Ausführungsform dadurch, dass aus der der funktionalen Schicht 30 gegenüberliegenden Seite der Tragstruktur 20 zusätzlich eine schallabsorbierende Beschichtung 50 angeordnet ist.

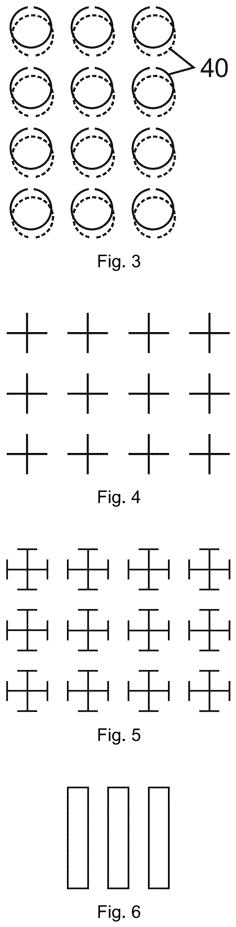

In Fig. 3 sind die in Fig. 1 und Fig. 2 gezeigten Spaltringe 40 dargestellt, wobei eine Ebene durchgezogen und die andere gestrichelt dargestellt ist. Für eine Erkennbarkeit ist die hinteren Ebene etwas perspektivisch verschoben. Erkennbar ist, dass in der vorderen Ebene der Spalt der Spaltringe 40 nach oben und in der hinteren Ebene nach unten zeigt.

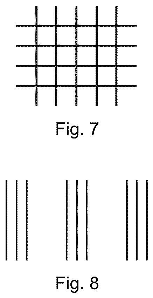

Als weitere alternative Resonanzstrukturen sind in Fig. 4 gekreuzte Dipole, in Fig. 5 Strukturen in Form des Jerusalemkreuzes, in Fig. 6 Streifen, Drähte beziehungsweise lineare Dipole, in Fig. 7 querverbundene Drähte und in Fig. 8 zweifach periodische Streifen gezeigt.

### Bezugszeichen

- 10: Verkleidungselement
- 20: Tragstruktur
- 30: funktionale Schicht
- 40: Spaltring
- 50: schallabsorbierende Beschichtung

## Patentansprüche

1. Verkleidungselement (10) für ein Unterseeboot, wobei das Verkleidungselement (10) eine funktionale Schicht (30) aufweist ist, wobei die funktionale Schicht (30) wenigstens zwei Ebenen aufweist, wobei in jeder Ebene eine elektrisch leitfähige Resonanzstruktur aufweist, wobei die funktionale Schicht (30) eine isolierende Matrix aufweist.

2. Verkleidungselement (10) nach Anspruch 1, **dadurch gekennzeichnet, dass** das Verkleidungselement (10) eine Tragstruktur (20) aufweist, wobei auf der Tragstruktur (20) die funktionale Schicht (30) angeordnet ist.

3. Verkleidungselement (10) nach Anspruch 2, **dadurch gekennzeichnet, dass** die Tragstruktur (20) ein faserverstärkter Kunststoff ist.

4. Verkleidungselement (10) nach einem der Ansprüche 2 bis 3, **dadurch gekennzeichnet, dass** die funktionale Schicht (30) mittel additiver Fertigungsverfahren auf die Tragstruktur (20) aufgebracht ist.

5. Verkleidungselement (10) nach einem der vorstehenden Ansprüche, **dadurch gekennzeichnet, dass** die elektrisch leitfähige Resonanzstruktur periodisch angeordnete elektrisch leitfähige Spaltringe (40) aufweist.

6. Verkleidungselement (10) nach Anspruch 5, **dadurch gekennzeichnet, dass** die Spaltringe (40) in den Ebenen so angeordnet sind, dass übereinander liegende Spaltringe (40) einen um 180 ° versetzte Spaltöffnung aufweisen.

7. Verkleidungselement (10) nach einem der vorstehenden Ansprüche, **dadurch gekennzeichnet, dass** das Verkleidungselement (10) für ein Ausfahrgerät mit einer Antenne ausgebildet ist, wobei die funktionale Schicht (30) durchlässig für die Frequenz der Antenne ist.

8. Verkleidungselement (10) nach einem der vorstehenden Ansprüche, **dadurch gekennzeichnet, dass** die funktionale Schicht (30) ein Metamaterial ist.

9. Verkleidungselement (10) nach einem der vorstehenden Ansprüche, **dadurch gekennzeichnet, dass** das Verkleidungselement (10) zusätzlich eine schallabsorbierende Beschichtung (50) aufweist.

10. Verfahren zur Herstellung eines Verkleidungselements (10) nach einem der vorstehenden Ansprüche, **dadurch gekennzeichnet, dass** das Verfahren die Schritte aufweist:
a) Bereitstellen einer Tragstruktur (20),
b) Auftragen einer funktionalen Schicht (30) mittels additiver Fertigungsverfahren.

11. Verfahren nach Anspruch 10, **dadurch gekennzeichnet, dass** als additives Fertigungsverfahren ein Lasersinterverfahren gewählt wird.

12. Verfahren nach einem der Ansprüche 10 bis 11, **dadurch gekennzeichnet, dass** das Auftragen in Schritt b) schichtweise parallel zur beschichteten Oberfläche der Tragstruktur (20) erfolgt.

13. Verfahren nach einem der Ansprüche 10 bis 12, **dadurch gekennzeichnet, dass** zur Auslegung der funktionalen Schicht (30) eine Durchlassfrequenz vorgegeben wird.

14. Verfahren nach einem der Ansprüche 10 bis 13, **dadurch gekennzeichnet, dass** die Absorptionseigenschaften der funktionalen Schicht (30) auf 10⁹ bis 10¹¹ Hz optimiert werden.
